# EUROPEAN PATENT APPLICATION

(11) **EP 4 636 285 A1**
(43) Date of publication of application: **22.10.2025**
(21) Application number: 23903422.6
(22) Date of filing: 07.12.2023
(51) Int. Cl.: F16J 15/3244, F16J 15/18

(54) **SEALING RING AND SEALING STRUCTURE**

(30) Priority: 15.12.2022 JP 2022200114
(71) Applicant: NOK Corporation, Minato-ku, Tokyo 105-8585 (JP); Eagle Industry Co., Ltd., Minato-ku Tokyo 105-8587 (JP)
(72) Inventor: KOBAYASHI, Kenta, Kitaibaraki-shi, Ibaraki 319-1535 (JP); YOSHIDA, Yusuke, Kitaibaraki-shi, Ibaraki 319-1535 (JP); TOKUNAGA, Yuichiro, Tokyo 105-8587 (JP); SUZUKI, Hiroshi, Tokyo 105-8587 (JP)
(74) Representative: TBK
(86) International application number: PCT/JP2023/043885
(87) International publication number: WO 2024/128135

(57) **Abstract**

Provided is a sealing ring and a sealing structure which achieve both a rotational torque reduction and a leakage amount reduction. In a sealing ring 100 that comes into close contact with an inner circumferential surface of a shaft hole in a housing through which a shaft is to be inserted and slides on a lower-pressure-side sidewall surface of an annular groove provided in an outer circumference of the shaft, a sliding surface that slides on the sidewall surface has a plurality of leakage preventing grooves 120 provided spaced apart from each other in a circumferential direction so as to communicate with a gap between an outer circumferential surface of the shaft and the inner circumferential surface of the shaft hole and to generate a force to return a fluid to be sealed from an outer circumferential surface side toward a region to be sealed on an inner circumferential surface side with the relative rotation of the shaft and the housing.

## Description

### [Technical Field]

The present invention relates to a sealing ring and a sealing structure.

### [Background Art]

In an Automatic Transmission (AT) or a Continuously Variable Transmission (CVT) for automobiles, to maintain a hydraulic pressure, a sealing ring is provided to seal an annular space between a shaft and a housing rotating relative to each other. In recent years, as a measure for addressing environmental problems, lower fuel consumption has been pursued, and there is also an increasing demand for reducing a rotational torque in the sealing ring mentioned above. Meanwhile, in order to reduce a size of an oil pump and improve operativity thereof, there is also an increasing demand for a reduced amount of leakage. Thus, there is a need for a sealing ring that can meet the conflicting demands, i.e., demand for the reduced rotational torque and demand for the reduced amount of leakage.

For example, a technology of reducing a rotational torque by providing a side surface of a sealing ring with a groove that generates a dynamic pressure is known. However, in this technology, the amount of leakage increases during high-speed rotation.

### [Citation List]

### [Patent Literature]

[PTL 1]
WO 2011/162283

### [Summary of Invention]

### [Technical Problem]

The present invention provides a sealing ring and a sealing structure which achieve both a rotational torque reduction and a leakage amount reduction.

### [Solution to Problem]

To solve the problem described above, the present invention has adopted the following means.

That is, the sealing ring of the present invention is a sealing ring to be attached to an annular groove provided in an outer circumference of a shaft to seal an annular gap between the shaft and a housing rotating relative to each other and to maintain a fluid pressure in a region to be sealed in which the fluid pressure varies, wherein the sealing ring comes into close contact with an inner circumferential surface of a shaft hole in the housing through which the shaft is to be inserted and slides on a lower-pressure-side sidewall surface of the annular groove, and wherein a sliding surface that slides on the sidewall surface has a plurality of leakage preventing grooves provided spaced apart from each other in a circumferential direction so as to communicate with a gap between an outer circumferential surface of the shaft and the inner circumferential surface of the shaft hole and to generate a force to return a fluid to be sealed from an outer circumferential surface side toward the region to be sealed on an inner circumferential surface side in conjunction with the relative rotation of the shaft and the housing.

Meanwhile, the sealing structure of the present invention is a sealing structure including: a shaft and a housing rotating relative to each other; and a sealing ring to be attached to an annular groove provided in an outer circumference of the shaft to seal an annular gap between the shaft and the housing and maintain a fluid pressure in a region to be sealed in which the fluid pressure varies, wherein the sealing ring comes into close contact with an inner circumferential surface of a shaft hole in the housing through which the shaft is to be inserted and slides on a lower-pressure-side sidewall surface of the annular groove, and wherein a sliding surface of the sealing ring that slides on the sidewall surface has a plurality of leakage preventing grooves provided spaced apart from each other in a circumferential direction so as to communicate with a gap between an outer circumferential surface of the shaft and the inner circumferential surface of the shaft hole and to generate a force to return a fluid to be sealed from an outer circumferential surface side of the sealing ring toward the region to be sealed on an inner circumferential surface side thereof in conjunction with the relative rotation of the shaft and the housing.

According to the present invention, the fluid to be sealed that tends to leak out of the region to be sealed into the gap between the outer circumferential surface of the shaft and the inner circumferential surface of the shaft hole is returned by the leakage preventing grooves provided in the sealing ring toward the region to be sealed. Thus, it is possible to prevent leakage of the fluid to be sealed. In addition, due to the leakage preventing grooves, the fluid to be sealed flows from the outer circumferential surface side of the sealing ring toward the region to be sealed on the inner circumferential surface side thereof, and consequently a dynamic pressure is generated so as to reduce a rotational torque.

The sliding surface of the sealing ring that slides on the sidewall surface may have a plurality of dynamic pressure generating grooves provided spaced apart from each other in the circumferential direction so as to communicate with the region to be sealed on the inner circumferential surface side of the sealing ring, the dynamic pressure generating grooves guiding the fluid to be sealed and generating a dynamic pressure in conjunction with the relative rotation of the shaft and the housing.

Thus, it is possible to further reduce the rotational torque. In addition, even when an effect of reducing the rotational torque is further increased by the dynamic pressure generating grooves, as described above, the provision of the leakage preventing grooves prevents the leakage of the fluid to be sealed.

Each of the dynamic pressure generating grooves may include an inlet groove portion that communicates with the region to be sealed on the inner circumferential surface side of the sealing ring and guides the fluid to be sealed, and a dynamic pressure generating groove portion that extends from the inlet groove portion toward an upstream side in a direction of the relative rotation of the sealing ring with respect to the sidewall surface.

Note that the individual configurations described above can be combined as variously as possible to be adopted.

### [Advantageous Effects of Invention]

As described above, according to the present invention, it is possible to achieve both a rotational torque reduction and a leakage amount reduction.

### [Brief Description of Drawings]

[Fig. 1]

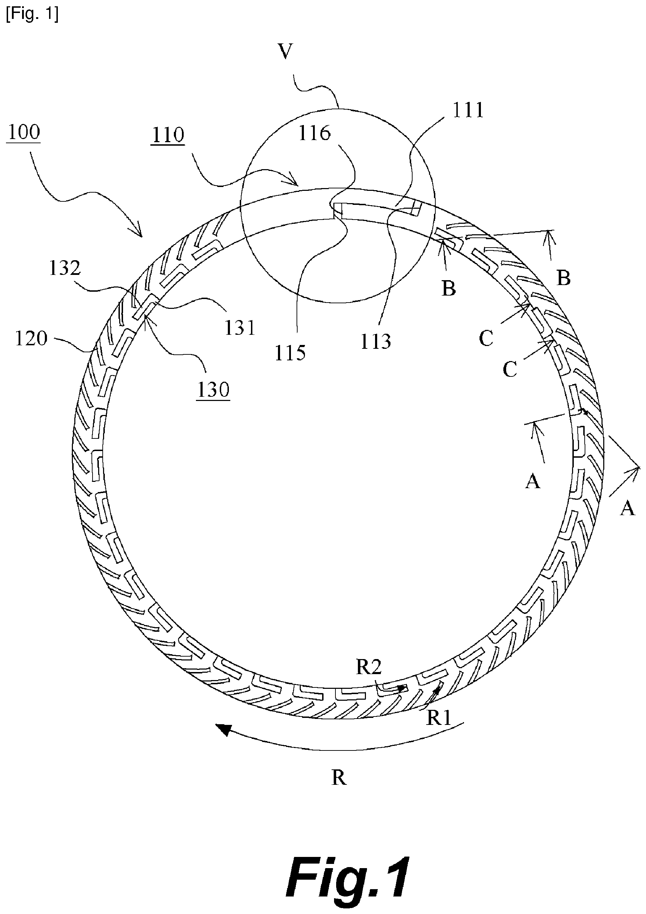

   Fig. 1 is a side view of a sealing ring according to a first embodiment of the present invention.
[Fig. 2]

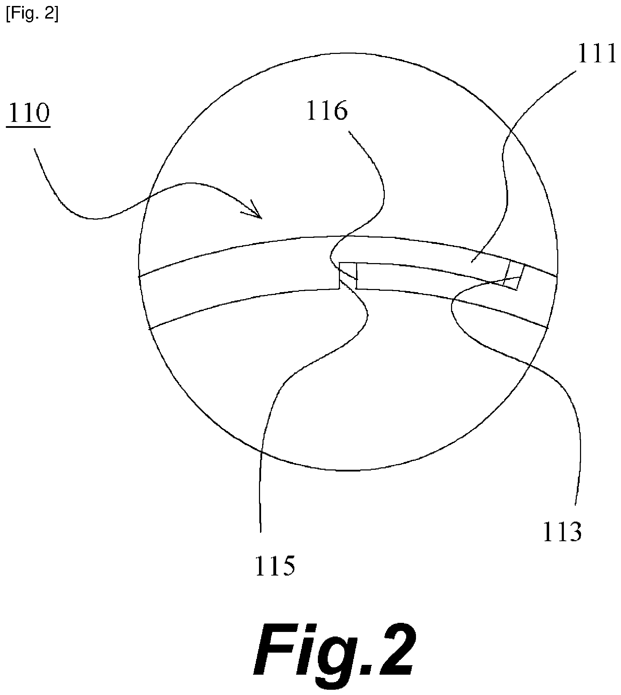

   Fig. 2 is a partially enlarged view of the side view of the sealing ring according to the first embodiment of the present invention.
[Fig. 3]

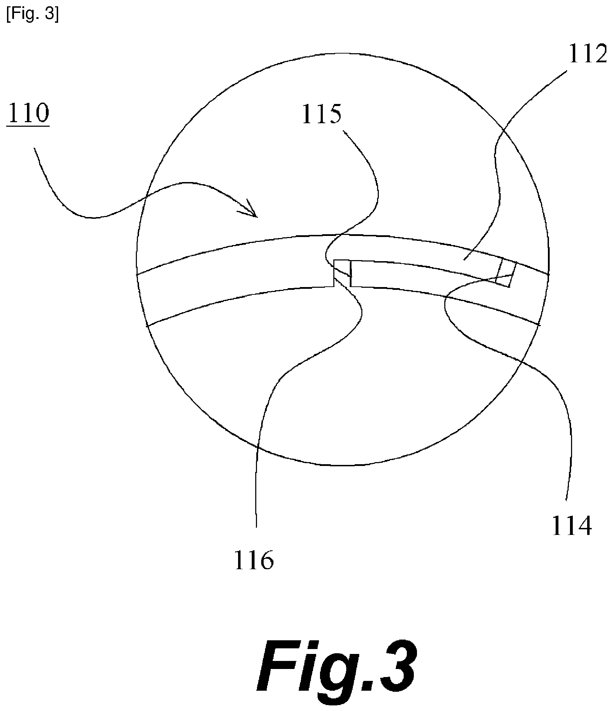

   Fig. 3 is a partially enlarged view of the side view of the sealing ring according to the first embodiment of the present invention.
[Fig. 4]

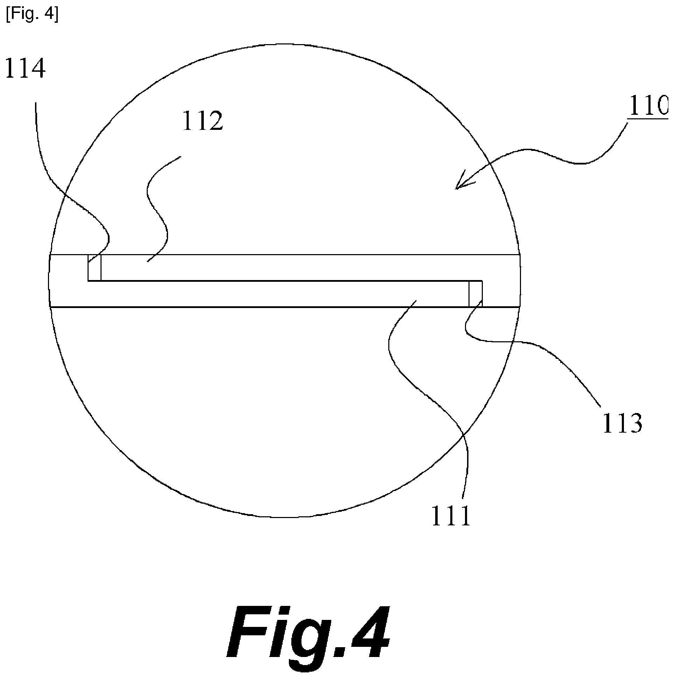

   Fig. 4 is a partially enlarged view of an outer circumferential surface of the sealing ring according to the first embodiment of the present invention.
[Fig. 5]

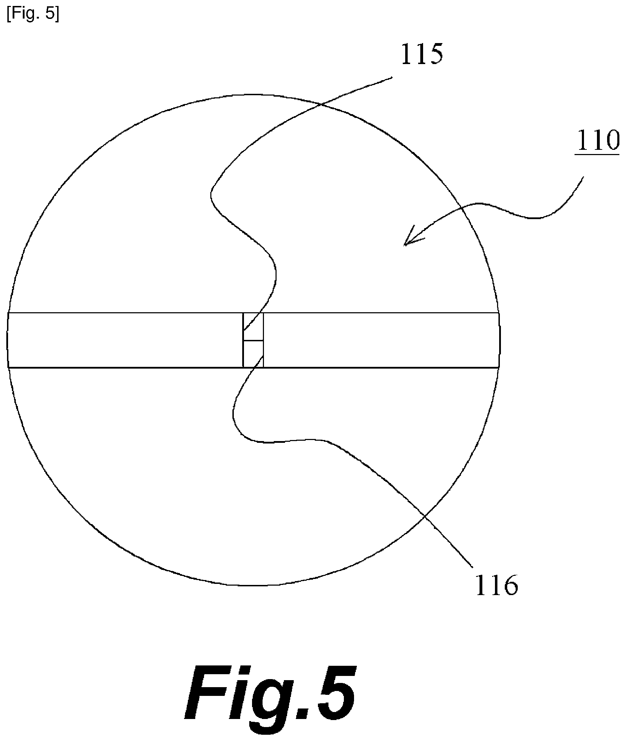

   Fig. 5 is a partially enlarged view of an inner circumferential surface of the sealing ring according to the first embodiment of the present invention.
[Fig. 6]

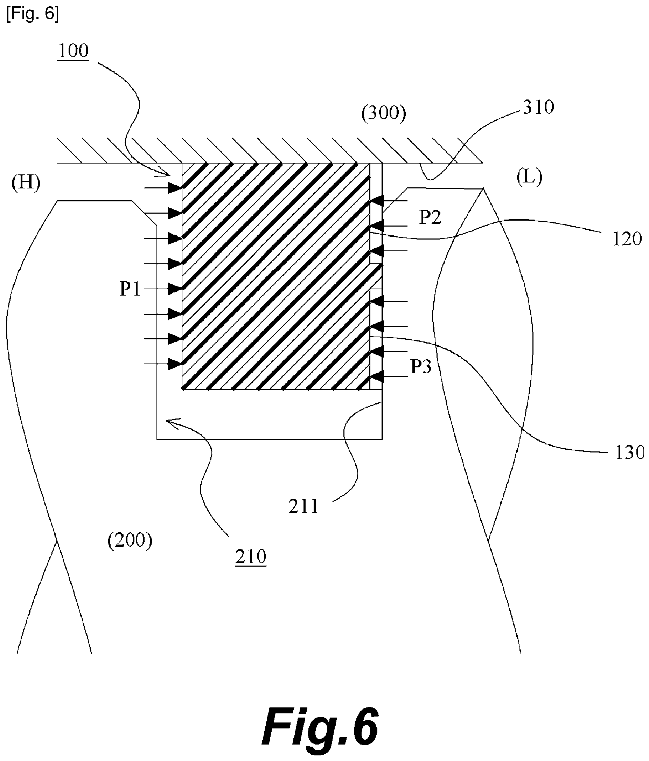

   Fig. 6 is a schematic cross-sectional view of a sealing structure according to the first embodiment of the present invention.
[Fig. 7]

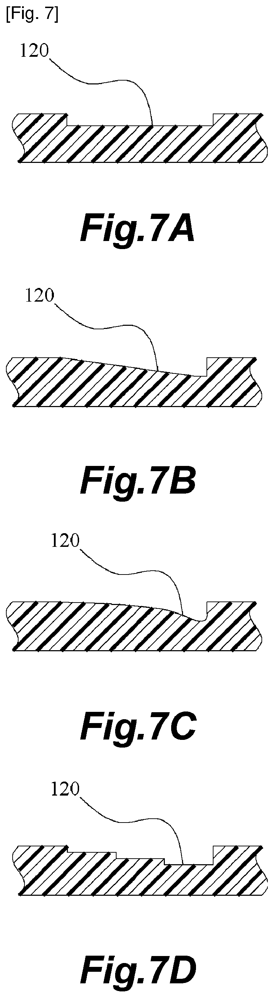

   Fig. 7 is a schematic cross-sectional view of the sealing ring according to the first embodiment of the present invention.
[Fig. 8]

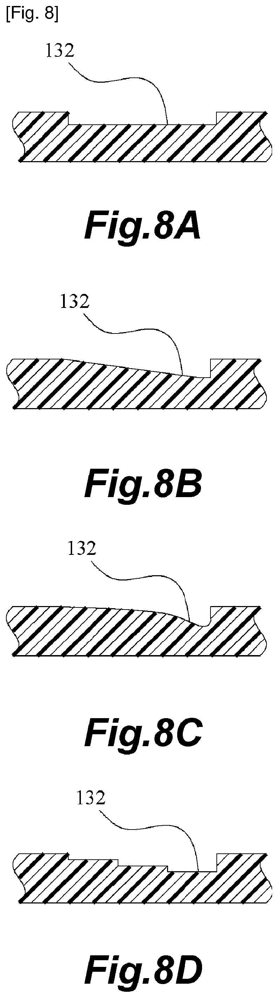

   Fig. 8 is a schematic cross-sectional view of the sealing ring according to the first embodiment of the present invention.
[Fig. 9]

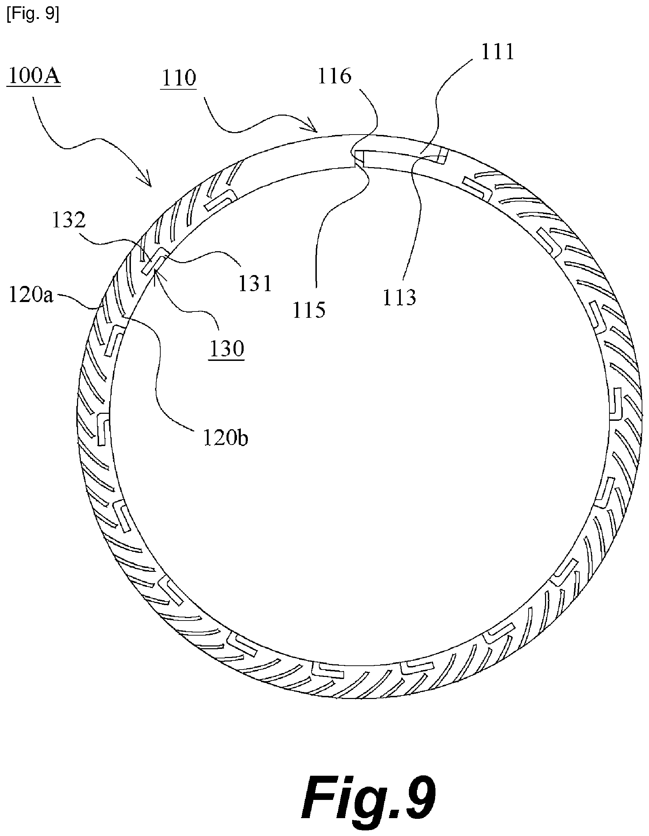

   Fig. 9 is a side view of a sealing ring according to a second embodiment of the present invention.
[Fig. 10]

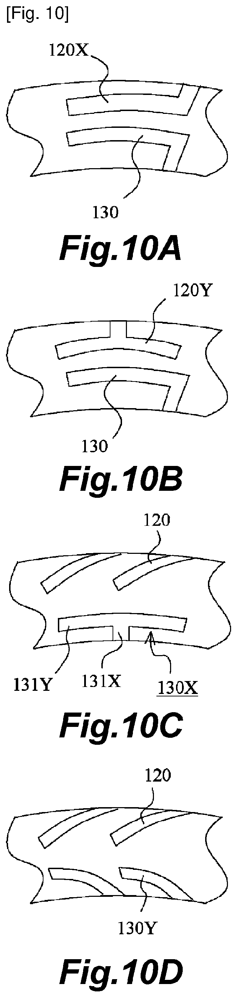

   Fig. 10 is a side view of a sealing ring according to another embodiment of the present invention.

### [Description of Embodiments]

Referring to the drawings, the following will illustratively describe modes for carrying out this invention in detail on the basis of embodiments. It should be noted that, unless particularly specified otherwise, the dimensions, materials, shapes, a relative arrangement, or the like of components described in the embodiments are not intended to limit the scope of this invention only thereto. Note that a sealing ring according to each of the embodiments of the present invention can be used appropriately for the purpose of, e.g., sealing an annular gap between a shaft and a housing rotating relative to each other to maintain a hydraulic pressure in a transmission for automobiles, such as AT or CVT. In the present embodiment, a description will be given by using a case where the sealing ring is used for such a purpose as an example. In addition, in the following description, a "higher-pressure side" means a side having a higher pressure when a differential pressure is produced between both sides of the sealing ring, while a "lower-pressure side" means a side having a lower pressure when the differential pressure is produced between both sides of the sealing ring.

### (First Embodiment)

Referring to Fig. 1 to Fig. 8, a description will be given of a sealing ring according to the first embodiment of the present invention. Fig. 1 is a side view of the sealing ring according to the first embodiment of the present invention. Fig. 2 is a partially enlarged view of the side view of the sealing ring according to the first embodiment of the present invention, which is an enlarged view of a portion V encircled in Fig. 1. Fig. 3 is a partially enlarged view of the side view of the sealing ring according to the first embodiment of the present invention, which is an enlarged view obtained by viewing the portion V encircled in Fig. 1 from the opposite side. Fig. 4 is a partially enlarged view of a view obtained by viewing the sealing ring according to the first embodiment of the present invention from an outer circumferential surface side, which is a partially enlarged view obtained by viewing the portion V encircled in Fig. 1 from the outer circumferential surface side. Fig. 5 is a partially enlarged view of a view obtained by viewing the sealing ring according to the first embodiment of the present invention from an inner circumferential surface side, which is a partially enlarged view obtained by viewing the portion V encircled in Fig. 1 from the inner circumferential surface side. Fig. 6 is a schematic cross-sectional view of a sealing structure according to the first embodiment of the present invention. Note that the sealing ring in Fig. 6 corresponds to a cross-sectional view along AA in Fig. 1.

### <Sealing Structure>

Referring particularly to Fig. 6, a description will be given of a sealing structure including a sealing ring 100 made of a resin according to the embodiment of the present invention. The sealing structure according to the present embodiment includes a shaft 200 and a housing 300 rotating relative to each other and the sealing ring 100 that seals an annular gap between the shaft 200 and the housing 300 (an inner circumferential surface 310 of a shaft hole in the housing 300 through which the shaft 200 is to be inserted). In other words, the sealing ring 100 according to the present embodiment is attached to an annular groove 210 provided in an outer circumference of the shaft 200 to come into close contact with the inner circumferential surface 310 of the shaft hole in the housing 300 through which the shaft 200 is to be inserted and slide on a lower-pressure-side (L) sidewall surface 211 of the annular groove 210, thereby sealing the annular gap between the shaft 200 and the housing 300 rotating relative to each other. Thus, the sealing ring 100 maintains a fluid pressure in a region to be sealed (higher-pressure-side (H) region) in which the fluid pressure (which is a hydraulic pressure in the present embodiment) varies. In other words, in the present embodiment, the fluid pressure (pressure of the fluid to be sealed (which is the hydraulic pressure in the present embodiment)) in a left region in Fig. 6 is adapted to vary, and the sealing ring 100 functions to maintain the fluid pressure in the region to be sealed on a left side in the drawing. Note that, in a state where an engine of an automobile is stopped, the fluid pressure in the region to be sealed is low and in an unloaded state, while the fluid pressure in the region to be sealed is increased when the engine is started.

### <Sealing ring>

Referring particularly to Fig. 1 to Fig. 5, a more detailed description will be given of the sealing ring 100 according to the present embodiment. The sealing ring 100 according to the present embodiment is made of a resin material such as polyetheretherketone (PEEK), polyphenylenesulfide (PPS), or polytetrafluoroetylene (PTFE). In addition, a circumferential length of an outer circumferential surface of the sealing ring 100 is configured to be shorter than a circumferential length of the inner circumferential surface 310 of the shaft hole in the housing 300 to have no interference.

At one position in a circumferential direction of the sealing ring 100 according to the present embodiment, a joint portion 110 is provided. Referring to Fig. 2 to Fig. 5, a description will be given particularly of a configuration of the joint portion 110. The joint portion 110 according to the present embodiment uses a special step cut that is cut in a stepped shape when viewed from either of an outer circumferential surface side and both sidewall surface sides. As a result, in the sealing ring 100, a first fitting protruded portion 111 and a first fitting depressed portion 114 are provided on one side of a cut portion in the outer circumferential surface side, while a second fitting depressed portion 113 to be fitted with the first fitting protruded portion 111 and a second fitting protruded portion 112 to be fitted with the first fitting depressed portion 114 are provided on the other side of the cut portion in the outer circumferential surface side. Note that an end surface 115 on the one side of the cut portion in the inner circumferential surface side and an end surface 116 on the other side of the cut portion in the inner circumferential surface side face each other. The special step cut has a property, detailed description of which is omitted because it is a known technology, of maintaining stable sealing performance even when the circumferential length of the sealing ring 100 is varied by thermal expansion and contraction. Note that the "cut portion" may be formed not only by cutting work but also by molding. Note that a case where the joint portion 110 is formed by the special step cut is shown herein by way of example, but the joint portion 110 may be formed by other ways using a straight cut, a bias cut, a step cut or the like. Note that, when a low-elasticity material (such as PTFE) is used as a material of the sealing ring 100, it may also be possible not to provide the joint portion 110 and render the sealing ring 100 endless.

In a sidewall surface (sliding surface that slides on the lower-pressure-side (L) sidewall surface 211 of the annular groove 210) of the sealing ring 100, a plurality of leakage preventing grooves 120 are provided spaced apart from each other in the circumferential direction. The leakage preventing grooves 120 are provided so as to communicate with the gap between the outer circumferential surface of the shaft 200 and the inner circumferential surface 310 of the shaft hole to function to generate a force to return a fluid to be sealed from the outer circumferential surface side of the sealing ring 100 toward the region to be sealed on the inner circumferential surface side thereof with the relative rotation of the shaft 200 and the housing 300.

More specifically, the leakage preventing grooves 120 are configured to extend toward an upstream side in a direction (an arrow R direction in Fig. 1) of the relative rotation of the sealing ring 100 with respect to the housing 300 with increasing distance from the outer circumferential surface of the sealing ring 100 to the inner circumferential surface side thereof. Note that a planar shape of each of the leakage preventing grooves 120 may be either linear or curved. The leakage preventing groove 120 thus configured can generate the force to return the fluid to be sealed in an arrow R1 direction in Fig. 1 with the relative rotation of the shaft 200 and the housing 300.

Fig. 7 illustrates examples of various shapes of the leakage preventing grooves 120. Fig. 7 shows a cross-sectional view along BB in Fig. 1. As illustrated in Fig. 7A, a groove bottom surface of each of the leakage preventing grooves 120 may be configured as a surface parallel to the sidewall surface of the sealing ring 100 to have a uniform groove depth. Meanwhile, as illustrated in Fig. 7B to Fig. 7D, the groove bottom surface of the leakage preventing groove 120 may be configured to have the groove depth which is gradually reduced toward an upstream side in the direction of the relative rotation of the sealing ring 100 with respect to the housing 300. Such a configuration can increase a dynamic pressure. Note that Fig. 7B illustrates a configuration where the groove bottom surface is formed of a planar inclined surface, Fig. 7C illustrates a configuration where the groove bottom surface is formed of a curved surface, and Fig. 7D illustrates a configuration where the groove bottom surface is formed of a stepped surface.

In addition, in the sidewall surface (sliding surface that slides on the lower-pressure-side (L) sidewall surface 211 of the annular groove 210) of the sealing ring 100, a plurality of dynamic pressure generating grooves 130 are provided spaced apart from each other in the circumferential direction. The dynamic pressure generating grooves 130 are provided so as to communicate with the region to be sealed on the inner circumferential surface side of the sealing ring 100 and function to guide the fluid to be sealed with the relative rotation of the shaft 200 and the housing 300 and generate the dynamic pressure.

More specifically, each of the dynamic pressure generating grooves 130 has an inlet groove portion 131 that communicates with the region to be sealed on the inner circumferential surface side of the sealing ring 100 to guide the fluid to be sealed and a dynamic pressure generating groove portion 132 that extends from the inlet groove portion 131 toward the upstream side in the direction of the relative rotation of the sealing ring 100 with respect to the sidewall surface 211 (the arrow R direction in Fig. 1). With the dynamic pressure generating groove 130 thus configured, the fluid to be sealed flows in an arrow R2 direction in Fig. 1 with the relative rotation of the shaft 200 and the housing 300 to generate the dynamic pressure.

Fig. 8 illustrates examples of various shapes of the dynamic pressure generating groove portion 132 of the dynamic pressure generating grooves 130. Fig. 8 shows a cross-sectional view along CC in Fig. 1. As illustrated in Fig. 8A, the groove bottom surface of each of the dynamic pressure generating groove portions 132 may be configured as a surface parallel to the sidewall surface of the sealing ring 100 to have a uniform groove depth. Meanwhile, as illustrated in Fig. 8B to Fig. 8D, the groove bottom surface of each of the dynamic pressure generating groove portions 132 may be configured to have the groove depth which is gradually reduced toward the upstream side in the direction of the relative rotation of the sealing ring 100 with respect to the housing 300. Such a configuration can increase the dynamic pressure. Note that Fig. 8B illustrates a configuration where the groove bottom surface is formed of a planar inclined surface, Fig. 8C illustrates a configuration where the groove bottom surface is formed of a curved surface, and Fig. 8D illustrates a configuration where the groove bottom surface is formed of a stepped surface.

A structure of the sealing ring 100 thus configured can be summarized as follows. The sealing ring 100 is an annular member having an inner circumferential portion (inner circumferential surface), which is an annular surface, on a radially inner side. The sealing ring 100 has an outer circumferential portion (outer circumferential surface), which is an annular surface, on a radially outer side. The sealing ring 100 has a planar sealing surface extending in a radial direction. The sealing ring 100 has a planar surface opposite to the sealing surface. In the sealing ring 100, one of both planar side surfaces is used as the sealing surface. The sealing ring 100 has a shape in which one portion of the annular member is cut and has the joint portion 110 in which both end portions in the circumferential direction at the cut portion of the sealing ring 100 are abutting on each other and joined. In the sealing ring 100, the leakage preventing grooves 120 and the dynamic pressure generating grooves 130 each configured as described above are provided in the surface serving as the sealing surface.

### <Mechanism of Sealing ring in use>

Referring particularly to Fig. 6, a description will be given of a mechanism of the sealing ring 100 in use according to the present embodiment. Fig. 6 illustrates a state where the engine has been started and the fluid pressure is higher in a left region with respect to the sealing ring 100 than in a right region. As described above, the circumferential length of the outer circumferential surface of the sealing ring 100 according to the present embodiment is set shorter than the circumferential length of the inner circumferential surface of the shaft hole in the housing 300. Accordingly, in an unloaded state with no differential pressure between the left and right regions and no fluid pressure acting on the inner circumferential surface of the sealing ring 100, the sealing ring 100 may be apart from the sidewall surface of the annular groove 210 and may be apart from the inner circumferential surface 310 of the shaft hole in the housing 300.

In a state where the engine has started to produce a differential pressure, the fluid pressure from a region to be sealed side (higher-pressure side (H)) brings the sealing ring 100 into contact with the lower-pressure-side (L) sidewall surface 211 of the annular groove 210. In addition, with the relative rotation of the shaft 200 and the housing 300, the sidewall surface (sliding surface) of the sealing ring 100 slides on the sidewall surface 211. Moreover, a diameter of the sealing ring 100 is increased to bring the sealing ring 100 into close contact with the inner circumferential surface 310 of the shaft hole in the housing 300. Accordingly, the annular gap between the shaft 200 and the housing 300 is in a sealed state.

### <Advantage of Sealing ring According to Present Embodiment>

In the sealing ring 100 according to the present embodiment, the fluid to be sealed that tends to leak out of the region to be sealed into the gap between the outer circumferential surface of the shaft 200 and the inner circumferential surface 310 of the shaft hole is returned to the region to be sealed side by the leakage preventing grooves 120 provided in the sealing ring 100. Thus, it is possible to prevent the leakage of the fluid to be sealed. In addition, due to the leakage preventing grooves 120, the fluid to be sealed flows from the outer circumferential surface side toward the region to be sealed on the inner circumferential surface side to generate the dynamic pressure, and therefore it is also possible to reduce the rotational torque.

In addition, in the sealing ring 100 according to the present embodiment, the plurality of dynamic pressure generating grooves 130 are provided spaced apart from each other in the circumferential direction. This can further reduce the rotational torque. In Fig. 6, an arrow P1 indicates the fluid pressure that presses the sealing ring 100 against the sidewall surface 211 when a differential pressure is produced between both sides of the sealing ring 100. In the present embodiment, a pressure P2 caused by the leakage preventing grooves 120 and a pressure P3 caused by the dynamic pressure generating grooves 130 act on the sealing ring 100 toward the higher-pressure side (H). This can reduce the rotational torque.

The provision of the dynamic pressure generating grooves 130 increases a thickness of a fluid film (which is an oil film in the present embodiment) formed between the sealing ring 100 and the sidewall surface 211 during high-speed rotation, which results in a situation where leakage is intrinsically likely to occur. However, in the present embodiment, by the action of the leakage preventing grooves 120, the fluid to be sealed is returned to the region to be sealed as described above, and therefore it is possible to prevent the leakage of the fluid to be sealed even during the high-speed rotation.

### (Second Embodiment)

Fig. 9 illustrates the second embodiment of the present invention. The present embodiment illustrates a configuration where a layout of the leakage preventing grooves and the dynamic pressure generating grooves is different from the first embodiment described above. Other basic configurations and actions are the same as those in the first embodiment, and therefore a description thereof is omitted by assigning the same reference signs to the same components.

Fig. 9 is a side view of a sealing ring 100A according to the second embodiment of the present invention. A sealing structure including the sealing ring 100A according to the present embodiment is the same as that in the first embodiment described above, and therefore a description thereof is omitted. A material of the sealing ring 100A according to the present embodiment is also as described in the first embodiment. The sealing ring 100A also may be or may not be provided with the joint portion 110 formed in the various ways as described in the first embodiment.

In the sealing ring 100A according to the present embodiment, a plurality of leakage preventing grooves 120a and 120b and the plurality of dynamic pressure generating grooves 130 are provided. In the first embodiment described above, the configuration is shown in which all the leakage preventing grooves 120 are provided on the outer circumferential surface side of the dynamic pressure generating grooves 130. In other words, as illustrated in Fig. 1, the configuration is shown in which all the leakage preventing grooves 120 have inner-circumferential-surface-side leading ends thereof which are disposed radially outside the dynamic pressure generating grooves 130.

By contrast, the present embodiment is different from the first embodiment described above in that the leakage preventing grooves 120a having inner-circumferential-surface-side leading ends thereof disposed radially outside the dynamic pressure generating grooves 130 and the leakage preventing grooves 120b having inner-circumferential-surface-side leading ends thereof disposed radially inwardly of the radially outer end portions of the dynamic pressure generating grooves 130 are provided.

In the sealing ring and the sealing structure according to the present embodiment each configured as described above, the same effect as that in the first embodiment can be obtained. Note that, in a case of the present embodiment, an effect of preventing leakage is higher than in the first embodiment.

### (Others)

A configuration (shape) of each of the leakage preventing grooves is not limited to that shown in each of the embodiments described above. As long as a function of generating the force to return the fluid to be sealed from the outer circumferential surface side toward the region to be sealed on the inner circumferential surface side with the relative rotation of the shaft 200 and the housing 300 is achieved, any configuration may be adopted. For example, as illustrated in Fig. 10A, a leakage preventing groove 120X having a substantially L-shaped planar shape may be adopted or, as illustrated in Fig. 10B, a leakage preventing groove 120Y having a substantially T-shaped planar shape may be adopted.

A configuration (shape) of each of the dynamic pressure generating grooves is not limited to that shown in each of the embodiments described above. As long as a function of guiding the fluid to be sealed and generating the dynamic pressure with the relative rotation of the shaft 200 and the housing 300 is achieved, any configuration may be adopted. For example, as illustrated in Fig. 10C, a dynamic pressure generating groove 130X having a substantially T-shaped planar shape may be adopted or, as illustrated in Fig. 10D, a dynamic pressure generating groove 130Y having a curved linear planar shape (which may also be a linear shape) may be adopted. Note that the dynamic pressure generating groove 130X illustrated in Fig. 10C has an inlet groove portion 131X and a dynamic pressure generating groove portion 131Y. As to the dynamic pressure generating groove 130Y illustrated in Fig. 10D, the inlet groove portion and the dynamic pressure generating groove portion are not clearly distinguished from each other, but the dynamic pressure generating groove 130Y still has the respective functions of both groove portions. A combination of the configuration (shape) of the leakage preventing groove and the configuration (shape) of the dynamic pressure generating groove may be selected appropriately.

Depending on a balance between a rotational torque reducing effect and a leakage amount reducing effect, which are required by a use purpose, a use environment, or the like, whether the configuration in the first embodiment or the configuration in the second embodiment is to be used may be determined appropriately. In addition, dimensions/shapes of the leakage preventing grooves and the dynamic pressure generating grooves and the numbers thereof may be set appropriately depending on the balance between the required rotational torque reducing effect and the required leakage amount reducing effect.

The plurality of leakage preventing grooves and the plurality of dynamic pressure generating grooves may be provided only in one of both side surfaces of the sealing ring or in both side surfaces thereof. When the plurality of leakage preventing grooves and the plurality of dynamic pressure generating grooves are provided in both surfaces, the plurality of leakage preventing grooves and the plurality of dynamic pressure generating grooves may be provided appropriately with the same shapes/dimensions and the same layout configurations. In other words, for the sealing ring 100 illustrated in Fig. 1, a configuration in which, even when the sealing ring 100 is flipped over, the leakage preventing grooves 120 and the dynamic pressure generating grooves 130 are arranged as illustrated in Fig. 1 may be adopted appropriately. As a result, no matter which direction the sealing ring 100 is attached to the annular groove 210 of the shaft 200, the same function is achieved, and therefore an attaching operation is easy.

### [Reference Signs List]

- 100, 100A: Sealing ring

- 110: Joint portion
- 111: First fitting protruded portion
- 112: Second fitting protruded portion
- 113: Second fitting depressed portion
- 114: First fitting depressed portion
- 115, 116: End surface
- 120, 120a, 120b: Leakage preventing groove
- 130: Dynamic pressure generating groove
- 131: Inlet groove portion
- 132: Dynamic pressure generating groove portion
- 200: Shaft
- 210: Annular groove
- 211: Sidewall surface
- 300: Housing
- 310: Inner circumferential surface

## Claims

1. A sealing ring to be attached to an annular groove provided in an outer circumference of a shaft to seal an annular gap between the shaft and a housing rotating relative to each other and to maintain a fluid pressure in a region to be sealed in which the fluid pressure varies,
wherein the sealing ring comes into close contact with an inner circumferential surface of a shaft hole in the housing through which the shaft is to be inserted and slides on a lower-pressure-side sidewall surface of the annular groove, and
wherein a sliding surface that slides on the sidewall surface has a plurality of leakage preventing grooves provided spaced apart from each other in a circumferential direction so as to communicate with a gap between an outer circumferential surface of the shaft and the inner circumferential surface of the shaft hole and to generate a force to return a fluid to be sealed from an outer circumferential surface side toward the region to be sealed on an inner circumferential surface side in conjunction with the relative rotation of the shaft and the housing.

2. The sealing ring according to claim 1, wherein the sliding surface that slides on the sidewall surface has a plurality of dynamic pressure generating grooves provided spaced apart from each other in the circumferential direction so as to communicate with the region to be sealed on the inner circumferential surface side, the dynamic pressure generating grooves guiding the fluid to be sealed and generating a dynamic pressure with the relative rotation of the shaft and the housing.

3. The sealing ring according to claim 2, wherein each of the dynamic pressure generating grooves includes:
an inlet groove portion that communicates with the region to be sealed on the inner circumferential surface side and guides the fluid to be sealed; and
a dynamic pressure generating groove portion that extends from the inlet groove portion toward an upstream side in a direction of the relative rotation with respect to the sidewall surface.

4. A sealing structure comprising:
a shaft and a housing rotating relative to each other; and
a sealing ring to be attached to an annular groove provided in an outer circumference of the shaft to seal an annular gap between the shaft and the housing and to maintain a fluid pressure in a region to be sealed in which the fluid pressure varies,
wherein the sealing ring comes into close contact with an inner circumferential surface of a shaft hole in the housing through which the shaft is to be inserted and slides on a lower-pressure-side sidewall surface of the annular groove, and
wherein a sliding surface of the sealing ring that slides on the sidewall surface has a plurality of leakage preventing grooves provided spaced apart from each other in a circumferential direction so as to communicate with a gap between an outer circumferential surface of the shaft and the inner circumferential surface of the shaft hole and to generate a force to return a fluid to be sealed from an outer circumferential surface side of the sealing ring toward the region to be sealed on an inner circumferential surface side thereof in conjunction with the relative rotation of the shaft and the housing.

5. The sealing structure according to claim 4, wherein the sliding surface of the sealing ring that slides on the sidewall surface has a plurality of dynamic pressure generating grooves provided spaced apart from each other in the circumferential direction so as to communicate with the region to be sealed on the inner circumferential surface side of the sealing ring, the dynamic pressure generating grooves guiding the fluid to be sealed and generating a dynamic pressure with the relative rotation of the shaft and the housing.

6. The sealing structure according to claim 5, wherein each of the dynamic pressure generating grooves includes:
an inlet groove portion that communicates with the region to be sealed on the inner circumferential surface side of the sealing ring and guides the fluid to be sealed; and
a dynamic pressure generating groove portion that extends from the inlet groove portion toward an upstream side in a direction of the relative rotation of the sealing ring with respect to the sidewall surface.
